# EUROPÄISCHE PATENTSCHRIFT

(11) **EP 0 456 272 B1**
(45) Veröffentlichungstag und Bekanntmachung des Hinweises auf die Patenterteilung: **01.09.1993**
(21) Anmeldenummer: 91107724.6
(22) Anmeldetag: 13.05.1991
(51) Int. Cl.: C02F 5/08, C23F 11/08

(54) **Reiniger für Trinkwasseranlagen**
Cleaning agent for drinking water installations
Agent de nettoyage pour des installations à l'eau potable

(30) Priorität: 11.05.1990 DE 4015202
(43) Veröffentlichungstag der Anmeldung: 13.11.1991
(73) Patentinhaber: Wessollek, Heimo, D-90571 Schwaig (DE)
(72) Erfinder: Wessollek, Heimo, D-90571 Schwaig (DE)
(74) Vertreter: Neidl-Stippler, Cornelia, Dr.

(56) Entgegenhaltungen:
- DE-A- 3 504 394
- DE-A- 3 625 280

## Beschreibung

Die Erfindung betrifft einen Reiniger für Trinkwasseranlagen, die Ablagerungen wie Kalk, Fett, Eisen oder manganhaltige Verockerungen aufweisen, mit einer festen organischen oder anorganischen Säure und einer festen Peroxoverbindung, die toxikologisch unbedenklich sind.

Reiniger für Trinkwasseranlagen sind insbesondere zur Brunnenerhaltung, zur Pflege von Brunnen und Regenerierung derselben notwendig. Sie werden dabei in die Trinkwasseranlage eingebracht und bewirken in der Trinkwasseranlage eine Auflösung der dort vorhandenen oxidischen und carbonathaltigen Verockerungen, beispielsweise eisen- und/oder manganhaltigen Carbonaten und Oxiden.

Dabei sollen nach einer Reinigung des Brunnens keine Keime vorhanden sein, andererseits aber auch keine giftigen Substanzen aus der Reinigungslösung vorliegen.

Trinkwasserreiniger und Verfahren zum Reinigen von Trinkwasseranlagen, eingeschlossen Brunnen, Leitungen und dergleichen, sind bekannt.

So ist beispielsweise aus der DE-A 35 38 131 ein Lösungsmittel für schwer lösliche Carbonate bekannt geworden, das Citronen- oder Oxalsäure in Mischung mit einer festen Lewissäure, vorzugsweise Eisen- oder Aluminium-III-chlorid im Verhältnis von 1 : 3 zur Auflösung dieser Beläge verwendet. Das Verfahren ist insofern für Trinkwasseranlagen nachteilig, als es toxische Metallsalze enthält, die in Trinkwasseranlagen unerwünscht sind.

Oxalsäure ist toxisch und bildet ferner schwerlösliche Salze mit Calcium, das meist in den Brunnenanlagen enthalten ist.

Aus der DE-A 35 04 394 ist eine Mischung einer Mineralsäure, insbesondere Salzsäure, die gemeinsam mit 1 bis 10 Gew.-% einer organischen C₁ bis C₁₀-Persäure eingesetzt wird, um Wasserversorgungsanlagen zu reinigen, bekannt.

Die Verwendung anorganischer Säuren und insbesondere von Chloriden führt jedoch - insbesondere gemeinsam mit Persäuren - zur Bildung des giftigen Chlors, das in Trinkwasseranlagen unerwünscht ist. Ferner soll die Belastung der Umwelt mit anorganischen Anionen möglichst gering gehalten werden.

Schließlich ist das vorgeschlagene Mittel flüssig und erfordert besondere Maßnahmen in der Handhabung (Gefahren: Gütertransporte, Verätzungsgefahr beim Auslaufen).

Aus der DE-A 33 03 802 ist ein Verfahren zum Reinigen und Konditionieren von wasserführenden Systemen und ein Reiniger für Wasserbrunnen bekannt geworden, bei dem ein oberflächenaktives Mittel in Mischung mit einer dithionithaltigen Verbindung zur Auflösung der Beläge eingesetzt wird.

Das dort bis zu 70 Gew.-% eingesetzte Natriumdithionit ist ein anorganisches, toxisches Material, dessen Verwendung in Trinkwassersystemen möglichst vermieden werden sollte.

Aus der DE-A 38 28 229 ist eine Mischung von Ascorbinsäure, Amidosulfonsäure und Entschäumer, gemeinsam mit einem Biozid für wäßrige Reinigungsmittel, wie beispielsweise Benzalkoniumchlorid, Glutardialdehyd oder auch Glyoxal zum Reinigen von Brunnen u. dgl. bekannt.

Auch bei diesem Reinigungsmittel ist festzustellen, daß die Amidosulfonsäure toxisch ist, sodaß bei der Handhabung und der Entsorgung erhöhter Aufwand betrieben werden muß, abgesehen von den durch sie möglicherweise verursachten toxischen Ablagerungen im Brunnen, die ungünstig für Trinkwasseranlagen sind.

Aus der DE-A 28 55 822 ist ein Verfahren zur Entfernung von Ablagerungen, die Calciumoxalat als Hauptkomponente enthalten, bekannt geworden, bei dem eine wäßrige Lösung mit einem Gehalt an Aluminium- oder Eisen-III-ionen gemeinsam mit Anionen einer oder mehrerer Säuren aus der Gruppe der Mineralsäuren und organischen Säuren eingesetzt wird.

Aus der DE-B 20 40 546 ist eine wäßrige Lösung einer aliphatischen Carbonsäure zur Entfernung von Verockerungen oder Ablagerungen bekannt geworden, die L-Ascorbinsäure als aliphatische Carbonsäure enthält. Die Verwendung von L-Ascorbinsäure alleine ist insofern nachteilig, als'das Material relativ teuer ist und ferner zu Verkeimungen neigt.

Die Auslegeschrift gibt keinerlei Hinweis darauf, wie dieses Problem gelöst werden soll.

In der WO-A 84/02125 wird ein Verfahren zur Entfernung von manganhaltigen Inkrustationen aus zur Waasserversorgung betriebenen Einrichtungen beschrieben, das eine Lösung mit einem Gehalt von Salzsäure im Bereich von 0,001 N bis 6 N mit bis zu 20 Gew.-% Wasserstoffperoxid zum Spülen einsetzt.

Dieses Material ist durch die Verwendung des hochprozentigen Wasserstoffperoxids schwierig zu handhaben und explosiv, außerdem treten auch hier wieder die unerwünschten Effekte der Chloridionen auf.

Aus der DE-A 25 20 988 ist ein zweistufiges Verfahren bekannt geworden, das zuerst mit einer Säure behandelt und anschließend eine H₂O₂-Behandlung zur Oxidation von Lebewesen beinhaltet. Zweistufige Verfahren sind insofern nachteilig, als sie einen erheblich höheren Aufwand in der Handhabung und im Transport bedeuten, und ferner auch Fehlermöglichkeiten durch falsche Handhabung bestehen.

Aus der DE-A 36 25 280 ist es bekannt, Wirkkomponenten in fester Form einzusetzen, die eine erste, mit einer festen organischen oder anorganischen Säure gefüllte Teilpackung und eine zweite, mit einer festen Peroxoverbindung gefüllte Teilpackung aufweisen. Dabei ist dort die Peroxoverbindung bevorzugt ein Peroxoborat. Durch diese Entgegenhaltung werden also wasserfreie Reinigungsmittel vorgeschlagen, die noch dazu toxikologisch unbedenklich sein sollen.

Nichtsdestoweniger ist durch die Verwendung mehrfacher getrennter Packungen ein erheblicher Aufwand der Verpackung des Reinigungsmittels erforderlich.

Es ist also Aufgabe der Erfindung, ein lebensmittelrechtlich unbedenkliches Reinigungsmittel für Trinkwasseranlagen vorzuschlagen, das einfacher herzustellen und zu verpacken als die an sich bekannten Reinigungsmittel.

Die Aufgabe wird erfindungsgemäß durch einen gattungsgemäßen Reiniger dadurch gelöst, daß der Reiniger in einer Packung in fester Form eine Kombination von 50 bis 80 Gew.%, bevorzugt 55 bis 70 Gew.% und besonders bevorzugt 60 bis 65 Gew.% Zitronensäure, 20 bis 50 Gew.%, bevorzugt 30 bis 45 Gew.% und besonders bevorzugt 35 bis 40 Gew. % einer festen Peroxoverbindung, sowie 0,3 bis 10 Gew.%, bevorzugt 0,3 bis 1 Gew.% eines Lebensmittelkonservierungsstoffes in einer Packung aufweist, wobei die Summe aller Prozentsätze stets 100 ist.

Der erfindungsgemäße Reiniger wird üblicherweise zu einer meist etwa 10 gew%-igen Lösung in Wasser verarbeitet und diese Lösung sodann in das zu reinigende System verbracht.

Vorteilhafte Weiterbildungen der Erfindung ergeben sich aus den Unteransprüchen.

Dadurch, daß relativ untoxische und medizinisch unbedenkliche Substanzen verwendet werden, nämlich Citronensäure, ggf. Ascorbinsäure, Peroxidverbindungen, ausgewählt aus der Gruppe bestehend aus festen Perboraten, festen Percarbonaten, festen Perhydraten, festen Peroxodisulfaten und festen Persulfaten, sowie mindestens ein lebensmittelrechtlich zugelassener oder unbedenklicher Konservierungsstoff, ausgewählt aus der Gruppe bestehend aus Sorbinsäure, Benzoesäure, p-Hydroxybenzoeäure, Ameisensäure und Propionsäure sowie deren Abkömmlingen, eingeschlossen Salze und Ester derselben, bevorzugt Benzoesäure, kann ein Reinigungsmittel zur Verfügung gestellt werden, das vollkommen gesundheitlich in den eingesetzten Bedingungen unbedenklich ist, andererseits jedoch eine ausgezeichnete Reinigungswirkung für Brunnen besitzt.

Dabei ist festzustellen, daß die als Produkt der Sauerstofffreisetzung aus der bevorzugten Peroxoverbindung verbleibende Borsäure in der Medizin häufig als mildes Desinfektionsmittel eingesetzt wird, der freigesetzte Sauerstoff aber sogleich organische Substanzen im Wasserführungssystem oxidiert und dadurch Mikroorganismen unschädlich durch Oxidation macht, wobei der Sauerstoff als Gas entweicht und keine toxischen Reste im Wasserführungssystem verbleiben und auch Citronensäure lebensmittelrechtlich unbedenklich ist.

Citronensäure sowie das bevorzugt als Oxidationsmittel eingesetzte, als Produkt der Perboratzersetzung verbleibende Borat-Ion sind sehr gut wasserlöslich, bilden mit den üblichen Erdalkalimetallen und Eisenverbindungen der Verockerungen lösliche Salze und Komplexe und können daher gut zur Lösung und zum Abtransport der gelösten Ablagerungen dienen.

Benzoesäure als bevorzugtes zusätzliches Konservie-rungsmittel wirkt konservierend und antibakterizid, so daß die Peroxoverbindung noch weiter in ihrer bakteriziden Wirkung verstärkt wird.

Es konnte festgestellt werden, daß eine Kombination eines Perborats mit Benzoesäure die Keimzahl in Brunnen in überraschender Weise über einen langen Zeitraum auch in äußerst hartnäckigen Fällen zu erniedrigen vermochte, so daß auch bei organischen Säuren in bisher unerreichter Weise gute Keimzahlverminderungen auftreten konnten.

Insbesondere in Anbetracht der ständigen Bemühungen zur Reinerhaltung des Trinkwassers ist es daher erwünscht, nur ungiftige und auch ungefährliche Substanzen in derartigen Reinigungsmitteln zu haben.

Den Hauptbestandteil des Reinigers bildet Citronensäure und das leicht zu handhabende und nicht zu explosiven Zersetzungen wie andere Perverbindungen neigende Perborat wobei als Konservierungsmittel Benzoesäure oder eines ihrer Salze beigemischt ist.

Citronensäure ist dabei als ungiftiger Naturstoff mit einer zentralen Rolle im Stoffwechsel (Citronensäurezyklus) aller Organismen bekannt.

Es ist günstig, wenn zusätzlich zur Citronensäure auch Ascorbinsäure zu etwa einem Drittel der Citronensäuremenge in der Mischung vorliegt, da Ascorbinsäure komplexbildend und bakterizid wirkt. Um nachteilige Reaktionen zwischen Ascorbinsäure und der Perverbindung im Trockenen zu vermeiden, empfielt es sich, in diesem Falle ein Trocknungsmittel, wie ein Molekularsieb od. dgl. beizumischen, das die Zersetzung der Perverbindung durch Reaktion mit der Ascorbinsäure unterbindet.

Benzoesäure wird als Konservierungsstoff in der Lebensmittelindustrie eingesetzt. Sie ist ebenso wie ihre Salze als Lebensmittelzusatzstoff zugelassen und damit ebenfalls als ungiftig anzusehen. Gemäß Katalog des Bundesministeriums des Inneren vom 1.3.85 "Wassergefährdende Stoffe" wird Citronen- und Ascorbinsäure in WGK 0 (Wassergefährdungsklasse 0) eingestuft mit einem zusätzlichen Bonus für gute biologische Abbaubarkeit, während Benzoesäure aufgrund der bioziden Wirkungsweise in WGK 1 (schwach wassergefährdende Stoffe) eingestuft wird, wobei auch zu berücksichtigen ist, daß der Gewichtsanteil der Benzoesäure im Produkt niedrig ist.

Citronensäure und auch Borate bilden auch Komplexe mit Metallionen und vermögen dadurch die Auflösung und den Abtransport von metallhaltigen Ablagerungen in Brunnen gegenüber den häufig verwendeten Mineralsäuren, die eine geringere Komplexbildungsneigung zeigen, zu erleichtern.

Es ist also festzstellen, daß das Reinigungsmittel aus wasserhygienischer Sicht ein dem biologischen Abbau gut zugängliches Produkt darstellt, das zudem ausgesprochen ungiftig für den Menschen ist. Es hat in wasserführenden Systemen eine sehr gute Wirkung gegen Kalk- sowie Eisen- und Manganablagerungen. Die sehr gute antibakterielle Wirkung stellt eine eindeutige Minderung der Keimvermehrung im Wasser dar.

Ein weiterer Vorteil der erfindungsgemäßen Zusammensetzung besteht darin, daß sie fest ist, also kein Wassergehalt unnötig erhöhte Transportkosten verursacht.

Weitere Vorteile und Merkmale der Erfindung ergeben sich aus der nachfolgenden Beschreibung, in der die Erfindung anhand von Ausführungsbeispielen näher erläutert ist.

### Beispiel

Es werden 8 Gewichtsteile Citronensäure mit 2 Gewichtsteilen Natriumperborat sowie 1 Gewichtsteil Benzoesäure innig vermischt und in Portionsbeutel zu 500 g eingeschweißt.

Die Beutel wurden am Einsatzort aufgeschnitten und jeweils 1:100 in Wasser gelöst und in das Trinkwassersystem eingebracht und dort 24 Stunden belassen. Anschließend wurde die Lösung aus dem System herausgepumpt. Es zeigte sich, daß das Trinkwassersystem gut regeneriert war. Die mikrobiologische Untersuchung zeigte keine Keimbildung.

### Herstellungsbeispiel

800 g Citronensäure werden mit 200 g Natriumperborat und 20 g Benzoesäure vermischt und in einen Polyethylenfolienbeutel eingeschweißt. Das Produkt ist reinweiß und ungiftig.

### Anwendungsbeispiel

3 g der Mischung aus dem Herstellungsbeispiel wurden in einen Erlenmeyerkolben mit 250 ml Wasser überführt und dazu 2,85 g eines trockenen Stückes einer Brunnenablagerung gegeben. Nach 24 Stunden trat eine vollständige Auflösung der Ablagerung auf.

## Patentansprüche

1. Reiniger für Trinkwasseranlagen, die Ablagerungen wie Kalk, Fett, Eisen oder manganhaltige Verockerungen aufweisen, mit einer festen organischen oder anorganischen Säure und einer festen Peroxoverbindung, die toxikologisch unbedenklich sind, dadurch gekennzeichnet, daß der Reiniger in einer Packung in fester Form eine Kombination von 50 bis 80 Gew.%, bevorzugt 55 bis 70 Gew.% und besonders bevorzugt 60 bis 65 Gew.% Zitronensäure, 20 bis 50 Gew.%, bevorzugt 30 bis 45 Gew.% und besonders bevorzugt 35 bis 40 Gew. % einer festen Peroxoverbindung, sowie 0,3 bis 10 Gew.%, bevorzugt 0,3 bis 1 Gew.% eines Lebensmittelkonservierungsstoffes in einer Packung aufweist, wobei die Summe aller Prozentsätze stets 100 ist.

2. Reiniger nach Anspruch 1, dadurch gekennzeichnet, daß das Lebensmittelkonservierungsmittel ausgewählt ist aus der Gruppe bestehend aus Sorbinsäure, Benzoesäure, p-Hydroxybenzoeäure, Ameisensäure und Propionsäure sowie deren Abkömmlingen, eingeschlossen Salze und Ester derselben.

3. Reiniger nach Anspruch 1 oder 2, dadurch gekennzeichnet, daß die Peroxoverbindung eine feste Peroxoverbindung, ausgewählt aus der Gruppe bestehend aus festen Perboraten, festen Percarbonaten, festen Perhydraten, festen Peroxodisulfaten und festen Persulfaten, ist.

4. Reiniger nach einem der Ansprüche 1 bis 3, dadurch gekennzeichnet, daß die Zitronensäure bis zu 15 bis 25 Gew.% der Gesamtmenge des festen Reinigers durch Ascorbinsäure ersetzt ist.

5. Reiniger nach einem der Ansprüche 1 bis 4, dadurch gekennzeichnet, daß der Reiniger zusätzlich Stabilisatoren, Trocknungsmittel, Säuerungsmittel, Korrosionsinhi-bitoren, Emulgatoren, Sprengmittel und/oder Netzmittel enthält.

6. Verfahren zum Reinigen von Trinkwasseranlagen, dadurch gekennzeichnet, daß eine Reinigungslösung in Wasser aus der Zusammensetzung nach einem der vorangehenden Ansprüche in die Trinkwasseranlage oder den Brunnen oder dergleichen eingebracht wird und nach einer Einwirkzeit daraus entfernt werden.

## Claims

1. Cleaner for drinking water facilities affected by deposits of calcium carbonate, grease, iron or manganese ochre, comprising a toxicologically non-hazardous organic or inorganic acid and a solid peroxo compound, characterized in that the cleaner comprises in one package in solid form a combination of 50 to 80 wt.%, preferably 55 to 70 wt.% and especially preferred 60 to 65 wt.% citric acid, 20 to 50 wt.%, preferably 30 to 45 wt.% and especially preferred 35 to 40 wt.% of a solid peroxo compound and 0.3 to 10 wt.%, preferably 0.3 to 1 wt.% of a food preserving agent, whereas the sum of all percentages always adds up to 100.

2. Cleaner according to claim 1, characterized in that the food preserving agent is selected from the group consisting of sorbic acid, benzoic acid, p-hydroxy benzoic acid, formic acid, propionic acid and derivatives thereof, including salts and esters thereof.

3. Cleaner according to claim 1 or 2, characterized in that the peroxo compound is a solid peroxo compound, selected from the group consisting of solid perborates, solid percarbonates, solid perhydrates, solid peroxo disulphates and solid persulphates.

4. Cleaner according to any of the claims 1 to 3, characterized in that from 15 to 25 wt.% of the solid cleaner's total content of citric acid is replaced by ascorbic acid.

5. Cleaner according to any one of the claims 1 to 4, characterized in that it further contains stabilizers, drying agents, acidifying agents, corrosion inhibitors, emulsifying agents, disintegrants and/or surfactants.

6. Process for the cleaning of drinking water facilities characterized by introducing an aqueous cleaning solution of the composition according to one of the preceding claims into the drinking water facility, well or the like and removing the same after a certain period of application.

## Revendications

1. produit á nettoyer pour des installations d'eau potable qui présentent des dépôts tels que de calcaire, de graisse, de fer ou des incrustations magnésifères, contenant de l'acide organique ou inorganique solide non-toxique, caractérisé en ce qu'il contient dans une seule unité d'étourage sous forme solide une combinaison de 50 à 80 % en poids, de preférance entre 55 à 70 % en poids et tout particulièrement 60 à 65 % en poids d'acide citrique, 20 à 50 % de poids, de préférance 30 à 45 % en poids et tout particulierement 35 à 40 % en poids d'une peroxide solide, et 0,3 à 10 % en poids, de préférence 0,3 à 1 % en poids d'une conservateur alimentaire, le somme de tous ces pourcentages étant toujours 100.

2. produit selon la revendication 1, caractérisé en ce que ledit conservateur alimentaire est choisi parmi le groupe constitué de l'acide sorbique, l'acide benzoïque, l'acide hydroxybenzoïque-p, l'acide formique et l'acide propionique, ainsi que leurs dérivés, y compris leurs sels et esters.

3. produit selon une de quelconque des revendications 1 ou 2, caractérisé en ce que le peroxide est selectionné parmi le groupe comprenant des perborates solides, percarbonates solides, perhydrates solides, peroxodisulfates solides et persulfates solides.

4. produit selon une quelconque des revendications 1 à 3, caractérisé en ce que l'acide citronique est substitué de 15 à 25 % en poids de l'acide ascorbique.

5. produit selon une quelconque des revendications 1 a 4, caractérisé en ce que le produit à nettoyer contient additionellement des stabilisants, des produits desséchants, des acidifiants, des agents anticorrosifs, des émulsifiants, des désintégrants et/ou des agents mouillants.

6. procédé pour nettoyer des installations d'eau potable caractérisé en ce que le produit à nettoyer selon l'une quelquonque des revendications précedentes est mis dans une installation d'eau potable ou dans un puit ou autres choses de ce genre, et est enlevée après une durée d'action.
